# EUROPEAN PATENT APPLICATION

(11) **EP 2 360 868 A1**
(43) Date of publication of application: **24.08.2011**
(21) Application number: 11001280.4
(22) Date of filing: 16.02.2011
(51) Int. Cl.: H04L 12/10, H04L 29/06

(54) **Method and system for ethernet converter and/or adapter that enables conversion between a plurality of different ethernet interfaces**

(30) Priority: 23.02.2010 US 307246 P; 25.03.2010 US 731908
(71) Applicant: Broadcom Corporation, Irvine, CA 92617 (US)
(72) Inventor: William, Diab, Wael, 94109 San Francisco (CA)
(74) Representative: Jehle, Volker Armin

(57) **Abstract**

An active cable housing converts signals from one protocol to another protocol. Copper and/or an optical media may be utilized. PoE may provide power. Signals from a single interface are converted and distributed via a plurality of interfaces and vice versa. Signals received at one data rate are communicated via a plurality of interfaces at different rates. Signals received via a plurality of interfaces at one or more rates are combined, converted and/or communicated via a single interface at a different rate. The active cable housing may comprise RJ45 connectors and/or connectors that comprise a form factor that enable integration into a handheld device. The active cable housing may comprise a patch cord. The active cable housing may comprise one or more of a physical layer device, an OSI layer 2 device, a device that performs higher than OSI layer 2 functions and a switch.

## Description

### CROSS-REFERENCE TO RELATED APPLICATIONS/INCORPORATION BY REFERENCE

This application makes reference to and claims priority to United States Provisional Application Serial No. 61/307,246, filed on February 23, 2010, entitled "Method and System For Ethernet Converter And/Or Adapter That Enables Conversion Between A Plurality Of Different Ethernet Interfaces," which is incorporated herein by reference in its entirety.

This application also makes reference to:
United States Patent Application Serial No. (Attorney Docket Number 20740US01) which was filed on _____;
United States Patent Application Serial No. ____ (Attorney Docket Number 20743US01) which was filed on _____;
United States Patent Application Serial No. ____ (Attorney Docket Number 20745US01) which was filed on ____;
United States Patent Application Serial No. ____ (Attorney Docket Number 20746US01) which was filed on _____;
United States Patent Application Serial No. ____ (Attorney Docket Number 20747US01) which was filed on _____;
United States Patent Application Serial No. ___ (Attorney Docket Number 20748US01) which was filed on ____; and
United States Patent Application Serial No. ____ (Attorney Docket Number 20841 US01) which was filed on ____.

Each of the above stated applications is hereby incorporated herein by reference in its entirety.

### FIELD OF THE INVENTION

Certain embodiments of the invention relate to communication systems. More specifically, certain embodiments of the invention relate to an Ethernet converter and/or adapter that enables conversion between a plurality of different Ethernet interfaces.

### BACKGROUND OF THE INVENTION

Communication devices may incorporate a plurality of features, for example, a mobile phone, a digital camera, an Internet browser, a gaming device, a Bluetooth headphone interface and/or a location device. In this regard, the communication devices may be operable to communicate via a plurality of wire-line and/or wireless networks such as local area networks, wide area networks, wireless local area networks, cellular networks and wireless personal area networks, for example. In this regard, endpoint devices may communicate via various wireless and/or wire-line switches, routers, hubs, access points and/or base stations.

Many communication devices may communicate via twisted pair cables which may comprise pairs of copper wire that are twisted together. Various numbers of twists or turns in the wire pairs may enable mitigation of common mode electromagnetic interference. Twisted pair cabling may be shielded and/or unshielded. Shielding may comprise a conductive material that may enable grounding of the cable. A grounding wire may be also be utilized for grounding twisted pair cabling. The shielding may enclose a single pair of twisted wires and/or may enclose a plurality of pairs. The shielding may comprise foil and/or a braided sheath, for example. In this regard, the shielding may mitigate crosstalk between twisted pairs and/or between a plurality of cables. Various properties of a cable, for example, wire gauge, safety information, category, verification of testing, inner shielding, outer shielding, no shielding, type of use, such as patch cord, and/or country of manufacture may be imprinted on the cable jacket during manufacture.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for Ethernet converter and/or adapter that enables conversion between a plurality of different Ethernet interfaces.
According to an aspect, a method for communication is provided, the method comprising:
in an active cable housing:
   receiving one or more signals that are compliant with one or more communication protocols;
   converting said received one or more signals to one or more converted signals that are compliant with one or more different communication protocols; and
   communicating said converted one or more signals that are compliant with said one or more different communication protocols.
   Advantageously, said active cable housing comprises a copper and/or an optical medium.
   Advantageously, the method further comprises receiving and/or transmitting power over Ethernet.
   Advantageously, the method further comprises receiving said one or more signals via a single interface and distributing and/or communicating said converted one or more signals via a plurality of interfaces.
   Advantageously, the method further comprises receiving said one or more signals via a plurality of interfaces and communicating combined and/or converted one or more signals via a single interface.
   Advantageously, the method further comprises receiving said one or more signals via one interface at one data rate and communicating said converted one or more signals via a plurality of interfaces at one or more different data rates.
   Advantageously, the method further comprises receiving said one or more signals via a plurality of interfaces at one or more data rates and communicating one or more combined and/or converted signals via a single interface at a different data rate.
   Advantageously, said active cable housing comprises one or more of:
   one or more RJ 45 connectors; and
   a patch cord.
   Advantageously, said active cable housing comprises one or more connectors having a form factor that enables integration within a handheld device.
   Advantageously, said active cable housing comprises one or more of:
   a physical layer device;
   an OSI layer 2 device;
   a device that performs higher than OSI layer 2 functions; and
   a switch.
   According to an aspect, a system for communication comprises:
   one or more processors and/or circuits for use in an active cable housing, wherein said one or more processors and/or circuits are operable to:
      receive one or more signals that are compliant with one or more communication protocols;
      convert said received one or more signals to one or more converted signals that are compliant with one or more different communication protocols; and
      communicate said converted one or more signals that are compliant with said one or more different communication protocols.
   Advantageously, said active cable housing comprises a copper and/or an optical medium.
   Advantageously, said one or more processors and/or circuits are operable to receive and/or transmit power over Ethernet.
   Advantageously, said one or more processors and/or circuits are operable to receive said one or more signals via a single interface and distributing and/or communicating said converted one or more signals via a plurality of interfaces.
   Advantageously, said one or more processors and/or circuits are operable to receive said one or more signals via a plurality of interfaces and communicating combined and/or converted one or more signals via a single interface.
   Advantageously, said one or more processors and/or circuits are operable to receive said one or more signals via one interface at one data rate and communicating said converted one or more signals via a plurality of interfaces at one or more different data rates.
   Advantageously, said one or more processors and/or circuits are operable to receive said one or more signals via a plurality of interfaces at one or more data rates and communicating one or more combined and/or converted signals via a single interface at a different data rate.
   Advantageously, said active cable housing comprises one or more of:
   one or more RJ 45 connectors; and
   a patch cord.
   Advantageously, said active cable housing comprises one or more connectors having a form factor that enables integration within a handheld device.
   Advantageously, said active cable housing comprises one or more of:
   a physical layer device;
   an OSI layer 2 device;
   a device that performs higher than OSI layer 2 functions; and
   a switch.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary system that may comprise an active converter and/or adapter between different interfaces, in accordance with an embodiment of the invention.

FIG. 2A is a block diagram illustrating a cable housing that may comprise an active converter and/or adapter, in accordance with an embodiment of the invention.

FIG. 2B is a block diagram illustrating a cable housing that may be utilized with device comprising an active converter and/or adapter, which may be utilized in connection with an embodiment of the invention.

FIG. 3A is a block diagram illustrating an exemplary cabling system that comprises an active converter and/or adapter, in accordance with an embodiment of the invention.

FIG. 3B is a block diagram illustrating an exemplary patch panel that comprises an active converter and/or adapter, in accordance with an embodiment of the invention.

FIG. 4 is a block diagram illustrating an exemplary active cable housing that is operable to convert a higher rate signal to a plurality of lower rate signals for communication via a plurality of interfaces and vice versa, in accordance with an embodiment of the invention.

FIG. 5 is a block diagram illustrating an exemplary active patch panel that is operable to convert a higher rate signal to a plurality of lower rate signals for communication via a plurality of interfaces and vice versa, in accordance with an embodiment of the invention.

FIG. 6 is a flow chart illustrating exemplary steps for converting a signal received via a first interface to one or more signals that may be communicated via one or more different types of interfaces and vice versa, in accordance with an embodiment of the invention.

### DETAILED DESCRIPTION OF THE INVENTION

Certain embodiments of the invention can be found in a method and system for Ethernet converter and/or adapter that enables conversion between a plurality of different Ethernet interfaces. In accordance with various embodiments of the invention, one or more processors and/or circuits in an active cable housing may receive one or more signals that may be compliant with one or more communication protocols and may convert the received signals to one or more signals that may be compliant with one or more different communication protocols. The converted signals may be communicated based on the one or more different communication protocols. In this regard, the active cable housing may comprise a copper and/or an optical medium. Power over Ethernet (PoE) may be received by one or more processors and/or circuits in the active cable housing. The one or more signals may be received via a single interface and after conversion, may be distributed and/or communicated via a plurality of interfaces. Furthermore, one or more signals may be received via a plurality of interfaces; they may be combined and/or converted and communicated via a single interface. In this regard, the one or more signals may be received at one data rate and the converted one or more signals may be communicated via a plurality of interfaces at one or more different data rates. Alternatively, the one or more signals may be received via a plurality of interfaces at one or more data rates and may be combined and/or converted and communicated via a single interface at a different data rate. The active cable housing may comprise one or more RJ 45 connectors. The active cable housing may comprise one or more connectors having a form factor that enables integration within a handheld device and/or are small enough to pack greater that 48 connectors on a one rack unit (RU) face plate. The active cable housing may comprise a patch cord. Moreover, the active cable housing may comprise one or more of a physical layer device, an OSI layer 2 device, a device that performs higher than OSI layer 2 functions and a switch. In this manner, cable density in a switch may increase without increasing the number of connectors on the faceplate of the switch. Furthermore, utilization of the active cable housing may reduce energy consumption over traditional applications and may enable energy efficient Ethernet communications.

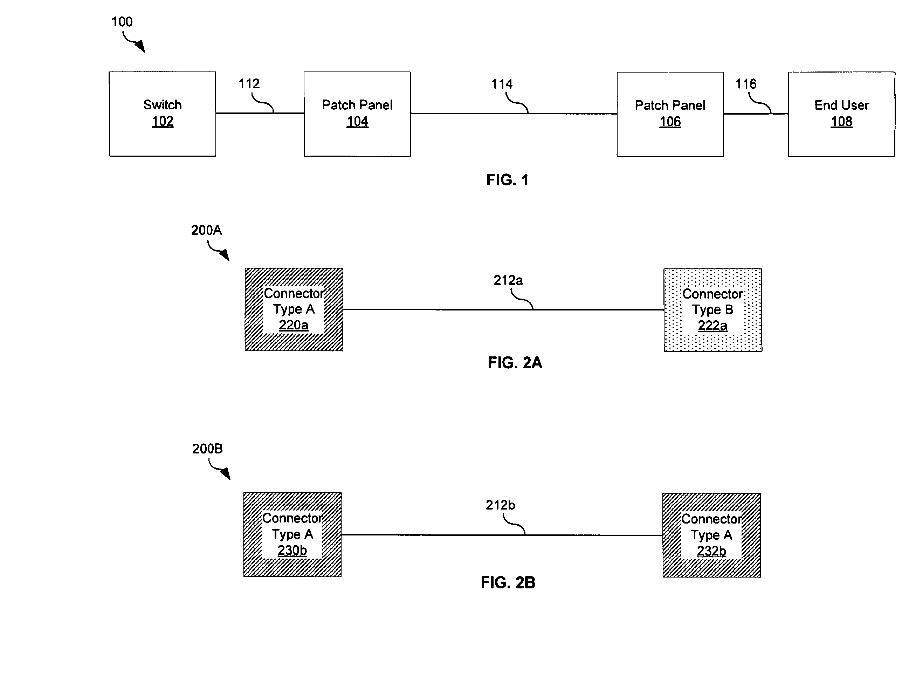

FIG. 1 is a block diagram illustrating an exemplary system that may comprise an active converter and/or adapter between different interfaces, in accordance with an embodiment of the invention. Referring to FIG. 1, there is shown a communication system 100 that comprises a switch 102, an active cable housing 112, a patch panel 104, a cable 114, a patch panel 106, a cable 116 and an endpoint device 108.

The system 100 comprises an exemplary embodiment of the invention which may be utilized in any suitable implementation of communication devices, for example, the system 100 may be utilized in an enterprise network, a home network, in a data center and/or in a wiring cabinet. The system 100 may be operable to facilitate power over Ethernet (PoE).

The switch 102 may comprise suitable logic, circuitry, interfaces, and/or code that may be operable to communicate data via a communication path that may span one or more network devices and/or one or more links. In an exemplary embodiment of the invention, the switch 102 may be communicatively coupled to the patch panel 104 via the link 112. The switch 102 may be operable to communicate based on one or more Ethernet protocols and/or may support, for example, Ethernet over copper and/or Ethernet over fiber operations. The switch 102 may be operable to communicate at one or more standard and/or non-standard communication rates, for example, 10 Mbps, 100 Mbps, 1000 Mbps (or 1 Gbps), 2.5 Gbps, 4 Gbps, 10 Gbps, or 40 Gbps. Moreover, the switch 102 may support standard Ethernet link lengths or ranges of operation and/or extended ranges of operation. Although a switch is shown in FIG. 1, the invention is not so limited and may be implemented utilizing any suitable communication device, for example, a router, a network controller, telephone equipment, an end-point, a computer system, audio/video (A/V) enabled equipment, or a combination thereof. In instances when the communication system 100 utilizes PoE and/or the switch 102 may communicate via the active cable housing 112 over copper, the switch may operable to perform power source equipment (PSE) functionality for the active cable housing 112 and/or for the patch panel 104, for example. United States Patent Application _____ (Attorney Docket 20746US01), filed on ____, which is incorporated herein by reference in its entirety, describes a connector and/or cabling system that may provide power over Ethernet functionality.

The patch panels 104 and/or 106 may comprise suitable logic, circuitry interfaces and/or code that may comprise a plurality of interconnection circuits and/or may be operable to interconnect various devices via various communication paths to various other devices. For example, the patch panels 104 and/or 106 may connect one or more devices to one or more other devices and/or may be operable to select a communication path from a plurality of choices. For example, a signal may enter the patch panel 104 via the cable active housing 112 at one port, and may exit the patch panel on one or more of a plurality a ports depending on which port the cable 114 is plugged into. In various exemplary embodiments of the invention, the patch panel 104 may be located in rack in a wiring cabinet, for example, and may be connected via the cable 114 to the patch panel 106. The patch panel 106 may be located in an office space, for example. The patch panel 106 that may be located in the office space may provide a coupling from the cable 114 to the cable 116 and may terminate in the end user device 108. The end user device 108 may be, for example, a computer, however, the invention is not so limited.

The active cable housing 112, the cable 114 and/or the cable 116 may comprise an electrical and/or optical medium. The active cable housing 112, the cable 114 and/or the cable 116 may comprise any suitable cable and/or connector technology. Exemplary cable and/or connector technology may comprise coaxial cables using, for example, BNC connectors, Ethernet Cat5, Cat5e, or Cat6 cables using 8P8C RJ-45 modular connectors with TIA/EIA-568-A or TIA/EIA-568-B wiring, Telco RJ-21 and/or MT-RJ connectors with optical fiber cables. In addition, the active cable housing 112, the cable 114 and/or the cable 116 my comprise one or more Ethernet connectors that may be small enough to fit in a handheld device and/or small enough to pack greater than 48 connectors in one rack unit. For example, the connectors may be modular and may be ganged together. United States Patent Application Serial No. ____ (Attorney Docket Number 20745US01) filed on ____, which is incorporated herein by reference in its entirety, may comprise additional information regarding such a connector and/or cabling system.

In operation, the system 100 may comprise the switch 102 and the patch panel 104 that may be communicatively coupled by the active cable housing 112. In an exemplary embodiment of the invention, the switch 102 and/or the patch panel 104 may be located in the same room, which may be cooled, for example. The active cable housing 112 may comprise a patch cord with a length that may be on the order of five feet, for example, although the invention is not so limited. The active cable housing 112 may comprise an active component that may be operable to serve as a bridge device between the switch 102 and one or more other devices, for example, the patch panel 104. In this regard, the active cable housing 112 may comprise suitable logic, circuitry, interfaces and/or code that may be operable to receive a signal from the switch 102 via one type of interface and convert the signal so that it may be transmitted via another type of interface, to the patch panel 104 and/or vice versa in the opposite direction.

FIG. 2A is a block diagram illustrating an active cable housing that may comprise an active converter and/or adapter, in accordance with an embodiment of the invention. Referring to FIG. 2A, there is shown an active connector and/or cable system 200A that may comprise a type A connector 220a, an active cable housing 212a and a type B connector 222a.

The active cable housing 212a may comprise a physical medium suitable for conveying data, control information and/or may convey power. In addition, the active cable housing 212a may comprise the type A connector 220a and/or the type B connector 222a. In instances when at least a portion of the active cable housing comprises a copper medium, the active cable housing may be operable to conduct and/or utilize power over Ethernet (PoE). For example the active cable housing 212a may comprise a powered device (PD). Moreover, in various embodiments of the invention, the active cable housing 212a may comprise a patch cord that may be utilized between the switch 102 and the patch panel 104. The active cable housing 212a may be similar and/or substantially the same as the active cable housing 112 described with respect to FIG. 1. For example, the active cable housing 212a may be referred to as a patch cord converter.

In operation, the active connector and/or cabling system 200A may be operable to communicate based on different protocols and/or may comprise different connectors at different ends of the active cable housing 212a. For example, within the active cable housing 212a, a signal may be converted and/or components of the signal may be separated between the connectors. All or a portion of a signal may be communicated by one type of interface via the type A connector 220a and by another type of interface via the type B connector 222a.

FIG. 2B is a block diagram illustrating a cable housing that may be utilized with device comprising an active converter and/or adapter, which may be utilized in connection with an embodiment of the invention. Referring to FIG. 2B, there is shown a connector and/or cable system 200B that may comprise two type A connectors 230b and 232b and a cable housing 212b.

The cable housing 212b may comprise a physical medium suitable for conveying data, control information and/or power. For example, the connector and/or cable system 200B may comprise the Ethernet Cat5, Cat5e, or Cat6 cables using 8P8C RJ-45 modular connectors. In another exemplary embodiment of the invention, the connector and/or cabling system 200B may comprise Telco RJ-21 connectors and/or MT-RJ connectors with optical fiber cables. Furthermore, the connector and/or cabling system 200b my comprise one or more Ethernet connectors that may be small enough to fit into a handheld device and/or small enough to pack greater than 48 connectors in a one rack unit faceplate.

In operation, the connector and/or cabling system 200B may comprise a link between the switch 102 and the patch panel 104. For example, the connector and/or cabling system 200B may comprise a patch cord. In various embodiments of the invention, the patch panel 104 may be operable to communicate via one port with the connector and/or cabling system 200B based on one protocol and/or may convert a signal to one or more signals that may be communicated via one or more ports based on one or more different protocols. For example, the patch panel 104 may communicate via the type A connector 220b via a 10GBASE-T Ethernet interface and may communicate on one or more other ports via a 1000BASE-T interface.

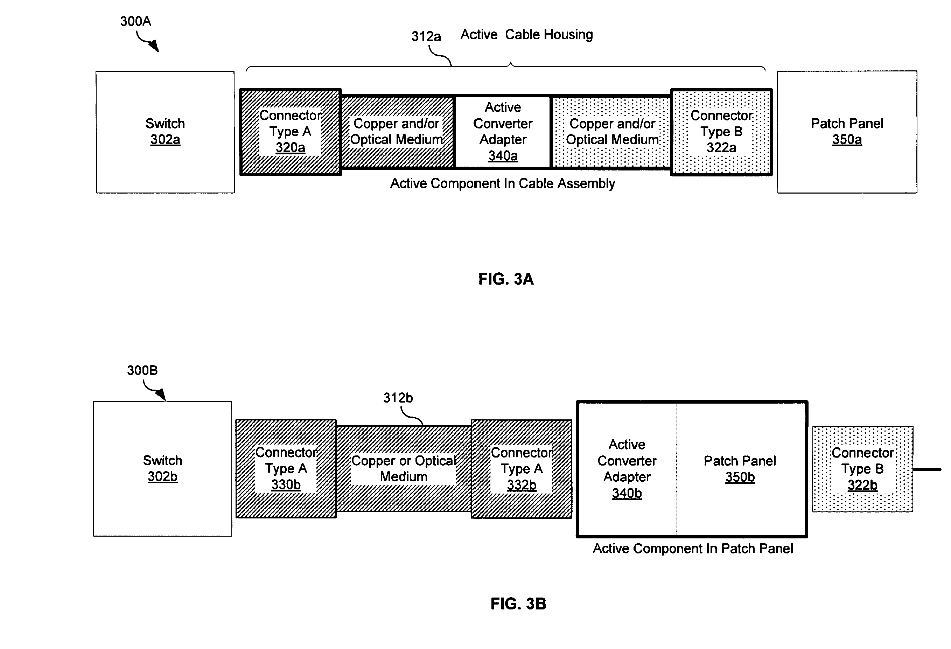

FIG. 3A is a block diagram illustrating an exemplary cabling system that comprises an active converter and/or adapter, in accordance with an embodiment of the invention. Referring to FIG. 3A, there is shown an communication system 300A that may comprise a switch 302a, a type A connector and attached cable 320a, an active cable housing 312a, an active converter 340a, a type B connector and attached cable 322a and a patch panel 350a.

The switch 302a and/or the patch panel 350a may be similar and/or substantially the same as the switch 102 and the patch panel 104 respectively.

The active cable housing 312a may be similar and/or substantially the same as the active cable housing 212a and/or the active cable housing 112. In this regard, the active cable housing 312a may comprise the type A connector and attached cable 320a, the active converter 340a and the type B connector and attached cable 322a. In instances when at least a portion of the active cable housing 312a comprises a copper medium, the active cable housing may be operable to conduct and/or utilize power over Ethernet (PoE). The active cable housing 312a may be operable to receive a signal via one type of interface in the type A connector 320a that may be formatted based on one protocol and may convert the signal to another protocol for transmission via the type B connector 322a and vice versa in the other direction. In this regard, the type A connector 320a may handle communication based on any suitable standard and/or non-standard protocol, for example, IEEE 802.3 and/or variations thereof. Accordingly, a data rate handled by the type B connector 322a may be different then a data rate handled by the type A connector type 320a. In an exemplary embodiment of the invention, the type A connector and attached cable 320a may comprise four twisted pair wires within an 8 position 8 conductor (8P8C) plug that may be referred to as RJ-45. Notwithstanding, the invention is not so limited and any suitable connector and/or cable may be utilized for the type A connector and attached cable 320a. The type B connector 322a on the other end of the active cable housing 312 may comprise a different style connector, for example, and/or may communicate based on a different communication interface and/or protocol interface.

The active converter 340a may comprise suitable logic, circuitry, interfaces and/or code that may be operable to convert signals that are formatted in accordance with one protocol to one or more signals that are formatted in accordance with one or more other protocols and/or data rates. The active converter 340a may comprise one or more physical layer devices (PHY). The active converter 340a may be integrated within the active cable housing 312a. For example, the active converter 340 may be located within one or more of cable sheathing, cable shielding and/or a cable jacket of the active cable housing 312a, for example. In this regard, one or more PHY devices may be housed within one or more of the cable sheathing, the cable shielding and/or the cable jacket of the active cable housing 312a. In various embodiments of the invention, the active converter 340a may comprise greater than two ports. For example, there may be a plurality of type B connectors and attached cable 322a.

In operation, the active cable housing 312a may be operable to communicate based on a plurality of different protocols and/or may comprise different connectors at different ends of the active cable housing 312a. The active converter 340a may convert signals and/or components of signals as they are communicated between the connector and attached cable 320a and the type B connector and attached cable 322a. For example, all or a portion of a signal may be communicated by one type of interface via the type A connector 320a and by another type of interface via the type B connector 322a. For example, the type A connector 320a may handle 10GBASE-T Ethernet signals. The type B connector 322a on the other end of the active cable housing 312a may handle 1000BASE-T signals that may comprise a portion of the information in the 10GBASE-T signal, for example. In this regard, a plurality of PHY devices within the cable housing 312a may be operable to transmit and/or receive the converted signals via the type A connector 320 and the type B connector 322a. Moreover the switch 302a and/or the patch panel 350a may supply power over Ethernet to the active able housing 312a and/or the active converter 340a. In this regard, at least one of the type A connector and attached cable 320a and the type B connector and attached cable 322a may comprise a copper medium.

FIG. 3B is a block diagram illustrating an exemplary active patch panel that comprises an active converter and/or adapter, in accordance with an embodiment of the invention. Referring to FIG. 3B, there is shown an communication system 300B that may comprise a switch 302b and a cable housing 312b that may comprise two type A connectors 330b and 332b. Also, there is shown an active patch panel 350b that may comprise an active converter 340b. The type B connector 322b is also shown.

The switch 302b may be similar and/or substantially the same as the switch 102 and/or the switch 302a. The cable housing 312b comprising the type A connectors 330b and 332b may be similar and/or substantially the same as the cable housing 212b. Also, the type B connector 322b may be similar and/or substantially the same as the type B connector 222b.

Various aspects of the active patch panel 350b may be similar to the patch panel 104 described with respect to FIG. 1. Moreover, various aspects of the active patch panel 350b may be similar to the active converter 340a, for example the signal conversion functionality. The active patch panel 350b may comprise suitable logic, circuitry, interfaces and/or code that may comprise a plurality of interconnection circuits and/or may be operable to interconnect various devices via various communication paths to various other devices. For example, the active patch panel 350b may connect one or more devices to one or more other devices and/or may be operable to select a communication path from a plurality of choices. A signal may enter the active patch panel 350b via the cable housing 312b and the Type A connector 332b at one port, and may exit the patch panel 350b via a port comprising the type B connector 322b. In this regard, the active patch panel 350b may comprise suitable logic, circuitry, interfaces and/or code that may be operable to receive a signal which is formatted based on a first protocol and may process the signal to convert it to another protocol format. The active patch panel 350b and may transmit the re-formatted signal via the type B connector 322b. Similarly, the active patch panel 350b may be operable to convert signals going in either or both directions. In this regard, the type A connector 332b may handle communication based on any suitable standard and/or non-standard protocol, for example, IEEE 802.3 and/or variations thereof. Accordingly, a data rate handled by the type B connector 322b may be different then a data rate handled by the type A connector type 332b. A passive patch panel may not be operable to convert signals from one protocol format to another.

The active converter 340b that may be integrated within the active patch panel 350b may comprise suitable logic, circuitry, interfaces and/or code that may be operable to convert signals that are formatted in accordance with one protocol to one or more signals that are formatted in accordance with one or more other protocols and/or data rates. In various embodiments of the invention, there may be a plurality of type B connectors 332b coupled to the active patch panel 350b. In this regard, the plurality of type B connectors 332b may be similar and/or the same or may comprise a plurality of connector styles, features and/or capabilities and/or may handle a plurality of different communication protocols, for example, a non-standard protocol or a standardized protocol such as IEEE 802.3 and/or variations thereof.

In operation, the active patch panel 350b may be operable to communicate based on a plurality of different protocols and/or a plurality of different data rates. In this regard, the active patch panel 350b may comprise the active converter 340b. The active converter 340b may convert one or more signals as they are communicated between the type A connector 332b and the type B connector 322b. One or more signals may be communicated by one type of interface via the type A connector 332b and by another type of interface via the type B connector 322b. For example, the type A connector 332b may handle 10GBASE-T Ethernet signals. The type B connector 332b on another port of the patch panel 350b may handle 1000BASE-T signals that may comprise a portion of the information in the 10GBASE-T signal, for example. In various embodiments of the invention, the active patch panel 350b may be powered by power over Ethernet via the type A connector 332b and/or the type B connector 322b and/or may receive power from any suitable power source.

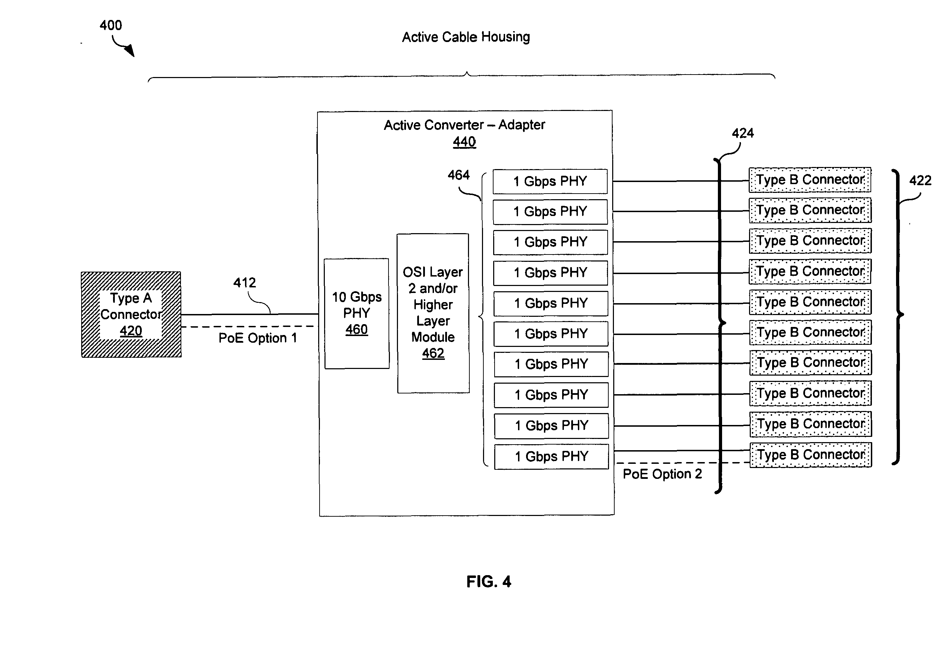

FIG. 4 is a block diagram illustrating an exemplary active cable housing that is operable to convert a higher rate signal to a plurality of lower rate signals for communication via a plurality of interfaces and vice versa, in accordance with an embodiment of the invention. Referring to FIG. 4, there is shown an active cable housing 400 that may comprise a type A connector 420, a cable segment 412, an active converter 440, a plurality of cable segments 424 and a plurality of type B connectors 422. The active converter 440 may comprise a PHY device 460, an OSI layer 2 and/or higher OSI layer module 462 and a plurality of PHY devices 464. The OSI layer 2 and/or higher OSI layer module 462 may be referred to as the layer 2 and/or higher layer module 462.

Various aspects of the active cable housing 400 may be similar and/or substantially the same as various aspects of the active cable housing 312a. For example, the type A connector 420 and/or the cable segment 412 may be similar and/or substantially the same as the type A connector and attached cable 320a. Furthermore, ones of the plurality of cable segments 424 and the plurality of type B connectors 422 may be similar and/or substantially the same as the type B connector and attached cable 322a. The cable segment 412, the active converter 440 and/or all or a portion of the plurality of cable segments 424 may be enclosed in one or more of a cable sheath, a cable shield and a cable jacket.

The cable segment 412 and/or the plurality of cable segments 424 may be communicatively coupled to the active converter 440. The active converter 440 may be integrated within the active cable housing 414 that may comprise the cable segment 412 and/or one or more of the plurality of cable segments 424. For example, the active converter 440 may be located within one or more of cable sheathing, cable shielding and/or a cable jacket of the active cable housing 414 for example. In this regard, one or more PHY devices, such as the PHY device 460, one or more of the plurality of PHY devices 464, and one or more layer 2 and/or higher layer modules, for example, the layer 2 and/or higher layer module 462, may be housed within one or more of a cable sheath, a cable shield and/or a cable jacket of the active cable housing 414.

In various embodiments of the invention, the type A connector 420 may be communicatively coupled to the switch 102 and one or more of the plurality of connectors 422 may be communicatively coupled to the patch panel 104 and/or to other patch panels and/or switches, for example.

The type A connector 420 and/or the cable segment 412 may comprise a copper or optical medium and the plurality of cable segments 424 and/or the plurality of type B connectors 422 may comprise a copper and/or optical medium. Moreover, the cable segment 412 may carry PoE from the switch 104 and/or one or more of the plurality of cable segments 424 may carry PoE, for example from the patch panel 104. For example, when the active cable housing 400 is powered by PoE, at least one of the cable segment 412 and/or one or more of the plurality of cable segments 424 may comprise a copper medium. In instances where the cable segment 412 comprises an optical medium, at least one of the plurality of cable segments 424 may comprise copper and/or may be operable to carry PoE from power supplying equipment, for example, from the patch panel 104. In instances when the plurality of cable segments 424 comprise an optical medium, the cable segment 412 may comprise a copper medium and may be operable to carry PoE from the switch 102, for example.

The active converter 440 may be similar and/or substantially the same as the active converter 340a described with respect to FIG. 3A. The active converter 440 may comprise suitable logic, circuitry, interfaces and/or code that may be operable to convert signals that are formatted in accordance with one protocol to one or more signals that are formatted in accordance with one or more other protocols. In this regard, signals may be communicated at one data rate on one port of the active converter 440 and may be communicated via a plurality of other ports, each at a lower data rate. The active converter 440a may be integrated within the active cable housing 400.

The PHY device 460 and/or the plurality of PHY devices 464 may comprise suitable logic, circuitry, interfaces and/or code that may be operable to perform OSI layer one functionality. The PHY device 460 and/or one or more of the PHY devices 464 may be communicatively coupled with the layer 2 and/or higher layer module 462. The PHY device 460 and/or the plurality of PHY devices 464 may each comprise suitable logic, circuitry, and/or code that may enable communication, for example, transmission and reception of data, between the active converter 440 and other devices, for example, the switch 102 and/or the patch panel 104. The PHY device 460 and/or the plurality of PHY devices 464 may support, for example, Ethernet over copper and/or Ethernet over fiber. The PHY device 460 and/or the plurality of PHY devices 464 may enable standard and/or nonstandard communication rates, such as 10 Mbps, 100 Mbps, 1000 Mbps (or 1 Gbps), 2.5Gbps, 4Gbps, 10 Gbps, or 40Gbps, for example. In various embodiments of the invention, the data transmitted and/or received by the PHY device 460 and/or the plurality of PHY devices 464 may be formatted in accordance with the well-known OSI protocol standard.

The layer 2 and/or higher layer module 462 may comprise suitable logic, circuitry, interfaces and/or code that may be operable to implement OSI data link layer 2 and/or higher OSI layer functions. The layer 2 and/or higher layer module 462 may comprise one or more of a device, of hardware, firmware and/or software that may be operable to perform, for example, media access control (MAC) functions and switching functions and/or other layer 2 or higher layer functions. For example, the layer 2 and/or higher layer module 462 may comprise a medium access controller, a switch and/or higher layer devices. The layer 2 and/or higher layer module 462 may be configured to implement Ethernet protocols, such as those based on the IEEE 802.3 standard and/or variations thereof, for example. Notwithstanding, the invention is not limited in this regard. The layer 2 and/or higher layer module 426 may comprise suitable logic, circuitry, interfaces and/or code that may be operable to handle addressing of data packets that are communicated via the active converter 440. In this regard, packets sent via the PHY device 460 and/or the plurality of PHY devices 464 may each be sent to a different address and/or received from a different address. Moreover, the layer 2 and/or higher layer module 426 may be operable to receive packets via the PHY device 460 and distribute the packets over one or more of the PHY devices 464. Similarly, the layer 2 and/or higher layer module 426 may be operable to receive packets via one or more of the plurality of PHY devices 464 and combine the packets into one packet stream to be transmitted via the PHY device 460.

In operation, the active cable housing 440 may be communicatively coupled to the switch 102 via the type A connector 420. In addition, the active cable housing 440 may be communicatively coupled to one or more devices that may comprise the patch panel 104 via the plurality of cable segments 424 and the plurality of type B connectors 422. The type A connector 420 may comprise an RJ 45 connector, for example, although the invention is not so limited. Also without limitation, one or more of the plurality of type B connectors 422 may comprise a different type of connector, for example, a connector that may be small enough to fit into a handheld device and/or small enough to pack greater than 48 connectors into a one RU face plate. The PHY device 460 may communicate with the switch 102 at a data rate of 10 Gbps, for example, based on 10GBASE-T. Ones of the plurality of PHY devices 464 may communicate with the patch panel 450 and/or other devices at a rate of 1 Gbps, for example based on 1000BASE-T. In this regard, the layer 2 and/or higher layer module 462 may receive the 10 Gbps packets via the PHY device 460, may convert the 10 Gbps signal to ten 1 Gbps signals and may distribute the ten 1 Gbps signals to the plurality of PHY devices 464. The plurality of PHY devices 464 may communicate the ten 1 Gbps signals via the plurality of cable segments 424 and the plurality of type B connectors 422 based on 1000BASE-T. For traffic flowing in the opposite direction, ones of the plurality of PHY devices 464 may receive 1000BASE-T packets at 1 Gbps and may each forward the packets to the layer 2 and/or higher layer module 462. The layer 2 and/or higher layer module 462 may convert the ten 1 Gbps signals into a combined 10 Gbps signal and may forward the 10 Gbps packets to the PHY device 460. The PHY device 460 may communicate the combined 10 Gbps signal based on 10GBASE-T to the switch 102 via the cable segment 412 and the type A connector 420. The active cable housing 400 and/or the active converter 440 may receive power via PoE from the switch 102 utilizing the type A connector 420 and/or the cable segment 412, for example. Although there is shown a conversion between 10 Gbps and ten 1 Gbps signals in the FIG. 4, the invention is not limited in this regard. For example, the active converter 440 may convert between any suitable signaling technologies, data rates and/or protocols and/or between any suitable types of connectors and/or physical media. For example the active converter 440 may be operable to convert between any suitable data rates such as, for example, between a 40 Gbps data rate carried via one link and ten links which are each operable to carry 10 Gbps traffic. The active converter 440 may be operable to handle telecommunication signals where the active cable housing 400 may comprise one or more RJ 21 connectors. In another exemplary embodiment, the active converter 440 may be operable to handle optical signals. In this regard, the active converter may convert between Ethernet over copper and Ethernet over fiber, for example. Moreover, in various embodiments of the invention, the signals may be converted from one signal protocol and/or medium to one or more different signal protocols and/or media. In this manner, cable density coming from the switch 102 may increase without increasing the number of connectors on the faceplate of the switch 102. The active converter 440 may be integrated within a cable sheath, a cable shield and/or a cable jacket which may comprise one or more of the cable segments 412 and/or 424.

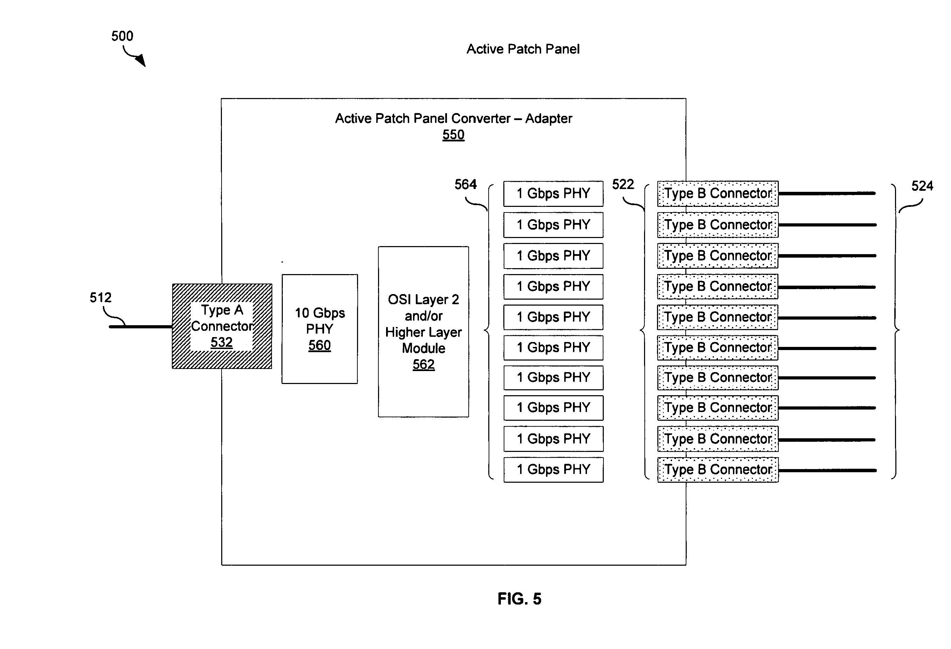

FIG. 5 is a block diagram illustrating an exemplary active patch panel that is operable to convert a higher rate signal to a plurality of lower rate signals for communication via a plurality of interfaces and vice versa, in accordance with an embodiment of the invention. Referring to FIG. 5, there is shown an active conversion system 500 that may comprise a cable 512, a type A connector 532, an active patch panel 550, a plurality of type B connectors 522 and a plurality of cables 524. The active patch panel converter 550 may comprise a PHY device 560, an OSI layer 2 and/or higher OSI layer module 562 and a plurality of PHY devices 564. The OSI layer 2 and/or higher OSI layer module 562 may be referred to as the layer 2 and/or higher layer module 562.

The active patch panel 550 may perform conversion of signals with substantially the same or similar results as the active converter 440 in the active cable housing 400. In this regard, the PHY device 560, the layer 2 and/or higher layer module 562 and the plurality of PHY devices 564 may be similar and/or substantially the same as the PHY device 460, the layer 2 and/or higher layer module 462 and the plurality of PHY devices 464. For example, the layer 2 and/or higher layer module 562 may comprise one or more of a device, hardware, firmware and/or software that may be operable to perform, for example, media access control (MAC) functions and switching functions and/or other layer 2 or higher layer functions. The layer 2 and/or higher layer module 462 may comprise a medium access controller, a switch and/or higher layer devices. The layer 2 and/or higher layer module 462 may be configured to implement Ethernet protocols, such as those based on the IEEE 802.3 standard and/or variations thereof, for example.

In an exemplary embodiment of the invention, the type A connector 532 may comprise a receptacle attached to the active patch panel 550 for terminating conductors and/or fiber in the cable 512. Similarly, the plurality of type B connectors 522 may comprise receptacles that may be attached to the active patch panel 550 for termination conductors and/or fiber from the plurality of cables 524, for example. The type A connector 532 may comprise a plug for terminating the cable 512 and/or the conductors may be punched into the connector 532 for termination, for example. Similarly each of the plurality of type B connectors 522 may comprise a plug for terminating conductors in the plurality of cables 524 and/or the conductors may be punched into the plurality of type B connectors 522 for termination. In various exemplary embodiments of the invention, one or more of the type A connector 520 and each of the plurality of type B connectors 522 may comprise an RJ 45 connector. Furthermore, one or more of the type A connector 520 and each of the plurality of type B connectors 522 may comprise a different type of connector that may be utilized for Ethernet, for example, that may be small enough to fit into a handheld device and/or small enough to pack greater than 48 connectors into a one RU face plate.

In operation, the active patch panel 550 may be communicatively coupled to the switch 102 via the type A connector 532. In addition, the patch panel 550 may be communicatively coupled to one or more devices that may comprise the patch panel 104, for example, via the plurality of type B connectors 522 and the plurality of cables 524. The PHY device 560 may communicate with the switch 102 at a data rate of 10 Gbps, for example based on 10GBASE-T. Each of the plurality of PHY devices 564 may communicate with the patch panel 550 and/or other devices at a rate of 1 Gbps, for example based on 1000BASE-T. In this regard, the layer 2 and/or higher layer module 562 may receive the 10 Gbps packets via the PHY device 560, may convert the signal to ten 1Gbps signals and may distribute the ten signals to one or more of the PHY devices 564 that may communicate the ten signals based on 1000BASE-T. For traffic flowing in the opposite direction, ones of the plurality of PHY devices 564 may receive 1000BASE-T packets at 1 Gbps and may each forward the packets to the layer 2 and/or higher layer module 562. The layer 2 and/or higher layer module 562 may convert the 1Gbps packets from the plurality of PHY devices 564 into a combined 10 Gbps signal and may communicate the signal to the PHY device 560. The PHY device 560 may communicate the combined 10 Gbps signal to the switch 102 via the type A connector 532 and the cable 512 based on 10GBASE-T. The patch panel 550 may receive PoE from the switch 102, for example, or from another power supply.

Although there is shown in FIG. 5, a conversion between 10GBASE-T and ten 1000BASE-T communication, the invention is not limited in this regard. For example, the active patch panel 550 may be operable to convert between any suitable signaling technologies, data rates and/or protocols and/or between any suitable types of connectors and/or physical media. For example the active patch panel 550 may be operable to convert between any suitable data rates such as, for example, between a 40 Gbps data rate carried via one link and ten links which each are operable to carry 10 Gbps traffic. The patch panel 550 may handle telco signals where the active patch panel 550 may comprise one or more RJ 21 connectors. In another exemplary embodiment, the active patch panel 550 may handle optical signals. In this regard, the active patch panel 550 may convert between Ethernet over copper and Ethernet over fiber, for example. Moreover, in various embodiments of the invention, the signals may be converted from one signal protocol and/or medium to one or more different signal protocols and/or media.

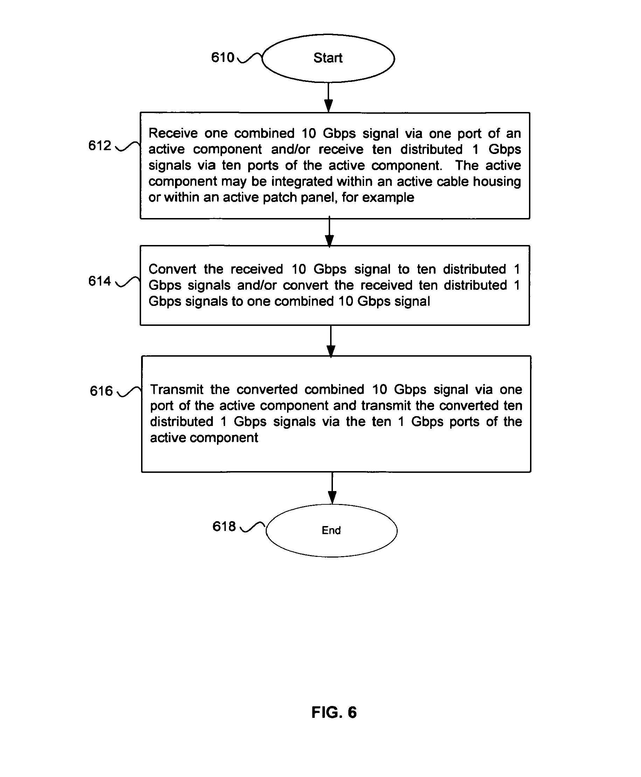

FIG. 6 is a flow chart illustrating exemplary steps for converting a signal received via a first interface to one or more signals that may be communicated via one or more different types of interfaces and vice versa, in accordance with an embodiment of the invention. Referring to FIG. 6, the exemplary steps may begin with step 610. In step 612, one combined 10 Gbps signal may be received via one port of an active component, for example, the active converter 440 and/or the active patch panel 550 and/or ten distributed 1 Gbps signals may be received via ten ports of the active component. The active component, for example, the active converter 440, may be integrated within the active cable housing 400 or within the active patch panel 550, for example. In step 614, the received 10 Gbps signal may be converted to ten distributed 1 Gbps signals and/or the received ten distributed 1 Gbps signals may be converted to one combined 10 Gbps signal. In step 616, the converted combined 10 Gbps signal may be transmitted via one port of the active component, for example, via the PHY device 460 in the active converter 440 and transmit the converted ten distributed 1 Gbps signals via the ten 1 Gbps ports of the active component, for example, via the plurality of PHY devices 464 in the active converter 440. Step 618 may be the end of the exemplary steps.
In an embodiment of the invention, one or more processors and/or circuits in an active cable housing 400 and/or in an active patch panel 550 may receive one or more signals that may be compliant with one or more communication protocols and may convert the received signals to one or more signals that may be compliant with one or more different communication protocols. The converted signals may be communicated based on the one or more different communication protocols. In this regard, the active cable housing 400 and/or the active patch panel 550 may comprise a copper and/or an optical medium. Power over Ethernet (PoE) may be received by one or more processors and/or circuits in the active cable housing 400 and/or in the active patch panel 550, for example, from the switch 302a and/or 302b. The one or more signals may be received via a single interface, for example, the PHY device 460 and/or the PHY device 560, and after conversion by the layer 2 and/or higher layer module 462 and/or the layer 2 and/or higher layer module 562, may be distributed and/or communicated via a plurality of interfaces, for example, via the plurality of PHY devices 464 and/or the plurality of PHY devices 564. Furthermore, one or more signals may be received via a plurality of interfaces, for example, the plurality of PHY devices 464 and/or the plurality of PHY devices 564, they may be combined and/or converted by the layer 2 and/or higher layer module 462 and/or the layer 2 and/or higher layer module 562 and may be communicated via a single interface, for example, via the PHY device 460 and/or the PHY device 560. In this regard, the one or more signals may be received at one data rate and the converted one or more signals may be communicated via a plurality of interfaces, for example, via the plurality of PHY devices 464 and/or the plurality of PHY devices 564, at one or more different data rates. Alternatively, the one or more signals may be received via a plurality of interfaces, for example, via the plurality of PHY devices 464 and/or via the plurality of PHY devices 564, at one or more data rates. The one or more signals may be combined and/or converted by the layer 2 and/or higher layer module 462 and/or the layer 2 and/or higher layer module 562 and may be communicated via a single interface at a different data rate, for example, via the PHY device 460 and/or the PHY device 560. The active cable housing 400 and/or the active patch panel 550 may comprise one or more RJ 45 connectors, for example, the type A connector 420 and/or the type A connector 532. The active cable housing 400 and/or the active patch panel 550 may comprise one or more connectors that comprise a form factor that enables integration within a handheld device. The connectors may comprise a form factor that enables integration of greater than 48 connectors on a one rack unit (RU) face plate, for example, one or more of the plurality of type B connectors 422 and/or one or more of the plurality of type B connectors 524. The active cable housing, such as the active converter 440 and/or the active patch panel converter 550 may comprise one or more of a physical layer device, an OSI layer 2 device, a device that performs higher than OSI layer 2 functions and a switch. For example, the layer 2 and/or higher layer module 462 or the layer 2 and/or higher layer module 562 may comprise a MAC device and a switch. Utilization of the active cable housing may reduce energy consumption over traditional applications and may enable energy efficient Ethernet communications.

Other embodiments of the invention may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for an Ethernet converter and/or adapter that enables conversion between a plurality of different Ethernet interfaces.

Accordingly, the present invention may be realized in hardware, software, or a combination of hardware and software. The present invention may be realized in a centralized fashion in at least one computer system or in a distributed fashion where different elements may be spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
in an active cable housing:
receiving one or more signals that are compliant with one or more communication protocols;
converting said received one or more signals to one or more converted signals that are compliant with one or more different communication protocols; and
communicating said converted one or more signals that are compliant with said one or more different communication protocols.

2. The method according to claim 1, wherein said active cable housing comprises a copper and/or an optical medium.

3. The method according to claim 1, comprising receiving and/or transmitting power over Ethernet.

4. The method according to claim 1, comprising receiving said one or more signals via a single interface and distributing and/or communicating said converted one or more signals via a plurality of interfaces.

5. The method according to claim 1, comprising receiving said one or more signals via a plurality of interfaces and communicating combined and/or converted one or more signals via a single interface.

6. The method according to claim 1, comprising receiving said one or more signals via one interface at one data rate and communicating said converted one or more signals via a plurality of interfaces at one or more different data rates.

7. The method according to claim 1, comprising receiving said one or more signals via a plurality of interfaces at one or more data rates and communicating one or more combined and/or converted signals via a single interface at a different data rate.

8. The method according to claim 1, wherein said active cable housing comprises one or more of:
one or more RJ 45 connectors; and
a patch cord.

9. The method according to claim 1, wherein said active cable housing comprises one or more connectors having a form factor that enables integration within a handheld device.

10. The method according to claim 1, wherein said active cable housing comprises one or more of:
a physical layer device;
an OSI layer 2 device;
a device that performs higher than OSI layer 2 functions; and
a switch.

11. A system for communication, the system comprising:
one or more processors and/or circuits for use in an active cable housing, wherein said one or more processors and/or circuits are operable to:
receive one or more signals that are compliant with one or more communication protocols;
convert said received one or more signals to one or more converted signals that are compliant with one or more different communication protocols; and
communicate said converted one or more signals that are compliant with said one or more different communication protocols.

12. The system according to claim 11, wherein said active cable housing comprises a copper and/or an optical medium.

13. The system according to claim 11, wherein said one or more processors and/or circuits are operable to receive and/or transmit power over Ethernet.

14. The system according to claim 11, wherein said one or more processors and/or circuits are operable to receive said one or more signals via a single interface and distributing and/or communicating said converted one or more signals via a plurality of interfaces.

15. The system according to claim 11, wherein said one or more processors and/or circuits are operable to receive said one or more signals via a plurality of interfaces and communicating combined and/or converted one or more signals via a single interface.
